# EUROPEAN PATENT APPLICATION

(11) **EP 3 396 345 A1**
(43) Date of publication of application: **31.10.2018**
(21) Application number: 17743917.1
(22) Date of filing: 10.01.2017
(51) Int. Cl.: G01L 19/14

(54) **REFRIGERANT CIRCUIT COMPONENT**

(30) Priority: 29.01.2016 JP 2016016013
(71) Applicant: Saginomiya Seisakusho, Inc., Tokyo 165-0033 (JP)
(72) Inventor: TAKIMOTO Kazuya, Sayama-shi Saitama 350-1395 (JP)
(74) Representative: Kramer Barske Schmidtchen Patentanwälte PartG mbB
(86) International application number: PCT/JP2017/000522
(87) International publication number: WO 2017/130686

(57) **Abstract**

An object of the invention is to provide a refrigerant circuit component such as a pressure sensor with which work man-hours can be reduced, workability can be improved, and an increase in cost can be suppressed by means of a structure preventing deviation or release of a wiring fixing band for fixing wiring, such as an electric wire pulled to the outside from an outer surface member, to the outer surface member. The refrigerant circuit component according to the invention such as a pressure sensor (100A) connected to piping of a refrigerant circuit includes a waterproof case (141A) disposed outside the pressure sensor (100A) to form an outline of the pressure sensor (100A), a protective tube (135) and a plurality of electric wires (133) pulled to an outside from the waterproof case (141A), and a wiring fixing band (10) disposed around the waterproof case (141A) and fixing the protective tube (135) and the plurality of electric wires (133), in which the waterproof case (141A) is provided with a wiring fixing band engagement structure (141Aa) so that deviation or release of the wiring fixing band (10) is prevented.

## Description

### Technical Field

The present invention relates to a refrigerant circuit component such as a pressure sensor connected to piping of a refrigerant circuit and, more particularly, to a refrigerant circuit component equipped with wiring such as electric wires for power supply from the outside or signal transmission and reception to and from the outside.

### Background Art

Known in the related art are refrigerant circuit components connected to piping of refrigerant circuits such as a pressure switch, a pressure-sensitive device such as a pressure sensor, and a valve device. Those include liquid seal-type pressure sensors that are disclosed in PTL 1, PTL 2, and so on, which are pressure sensors detecting the pressure of a fluid and transmitting a pressure detection signal to the outside.

As described later, a liquid seal-type pressure sensor includes a fluid supply unit supplying a fluid as a pressure detection object to a pressure chamber, a pressure detection unit detecting the pressure of the fluid in the pressure chamber, a signal transmission unit transmitting a pressure signal detected by the pressure detection unit to the outside, and an outer surface member covering the fluid supply unit, the pressure detection unit, and the signal transmission unit.

The pressure detection unit mainly includes a housing having a through hole, a diaphragm welded in an outer peripheral edge portion of the through hole at the lower end of the housing and isolating the pressure chamber and a liquid-sealed chamber (described later) from each other, a diaphragm protection cover disposed on the pressure chamber side of the diaphragm and welded with the diaphragm, a hermetic glass sealed inside the through hole of the housing, the liquid-sealed chamber formed between the diaphragm and a recessed portion on the lower end side of the hermetic glass and filled with a pressure transmission medium such as silicone oil, a support disposed in a through hole in the middle of the hermetic glass, a pressure detection element fixed to the support, disposed inside the liquid-sealed chamber, and detecting pressure fluctuation of the silicone oil via the diaphragm, a potential adjustment member disposed around the liquid-sealed chamber, and a plurality of lead pins disposed to penetrate the hermetic glass, connected to the pressure detection element by wire bonding, and performing input and output with respect to the pressure detection element.

In addition, the signal transmission unit mainly includes a terminal block disposed on the side of the housing that faces the pressure chamber and arranging the plurality of lead pins, a contact terminal connected to the plurality of lead pins, and a plurality of electric wires connected to the contact terminal and pulled to the outside from the outer surface member described above.

### Citation List

### Patent Literature

PTL 1: Japanese Patent Laid-Open No. 2014-98685
PTL 2: Japanese Patent Laid-Open No. 2012-68105
PTL 3: Japanese Patent Laid-Open No. 2003-299230

### Summary of Invention

### Technical Problem

In refrigerant circuit components such as the liquid seal-type pressure sensors disclosed in PTL 1 and PTL 2, wiring such as conduit tubes and electric wires pulled out from an outer surface member is fixed by a binding band such as Ty-Rap (registered trademark) being wrapped around the outer surface member. However, the binding band had a problem in that the binding band deviated or was released due to vibration or pulling of wiring. Moreover, additional problems arose in the form of reduced workability and higher costs when an adhesive material-attached sponge such as maltoprene was pasted to the outer surface member for the deviation to be prevented.

Disclosed in PTL 3 is an invention for fixing a casing capable of accommodating an electric circuit or the like and a cable pulled to the outside from the casing with a binding band near a pull-out portion of the casing. PTL 3 has a configuration in which a cable fixing portion including an accommodating space capable of accommodating a buckle portion of a binding band, a buckle back side surface abutting portion, a buckle lower side surface abutting portion, and a band portion insertion hole is disposed at a part of the casing and a fixed binding band is accommodated therein. However, PTL 3 discloses nothing about wiring fixing by means of binding band wrapping around a casing as an outer surface member.

Therefore, an object of the invention is to provide a refrigerant circuit component such as a pressure sensor with which work man-hours can be reduced, workability can be improved, and an increase in cost can be suppressed by means of a structure preventing deviation or release of a wiring fixing band such as a binding band for fixing wiring, such as an electric wire pulled to the outside from an outer surface member, to the outer surface member.

### Solution to Problem

In order to solve the above problems, a refrigerant circuit component according to the invention, which is a refrigerant circuit component connected to piping of a refrigerant circuit, includes an outer surface member disposed outside the refrigerant circuit component to form an outline of the refrigerant circuit component, at least one wire pulled to an outside from the outer surface member, and a wiring fixing band disposed around the outer surface member and fixing the at least one wire, in which the outer surface member is provided with a wiring fixing band engagement structure so that deviation or release of the wiring fixing band is prevented.

The outer surface member may have a cylindrical shape as a whole and the wire may be pulled out from a position deviating from a center of one end portion of the outer surface member.

The outer surface member may include a tubular waterproof case and a lid member disposed on at least one end portion of the waterproof case.

The outer surface member may include a tubular waterproof case.

The wiring fixing band engagement structure may be disposed on the waterproof case.

The wiring fixing band engagement structure may be disposed on the lid member.

The outer surface member may include a non-cylindrical part and the wire may be pulled out from a center of an upper portion of the non-cylindrical part.

The at least one wire may be pulled out in a lateral direction of the outer surface member.

The refrigerant circuit component may be a pressure sensor.

### Advantageous Effects of Invention

In the refrigerant circuit component according to the invention, the outer surface member is provided with the wiring fixing band engagement structure and this is to prevent deviation or release of the wiring fixing band for fixing wiring, such as an electric wire pulled to the outside from the outer surface member, to the outer surface member. Accordingly, work man-hours can be reduced, workability can be improved, and an increase in cost can be suppressed.

### Brief Description of Drawings

Fig. 1 is a longitudinal sectional view illustrating a liquid seal-type pressure sensor to which a wiring fixing band engagement structure of a refrigerant circuit component according to the invention is applied;
Fig. 2 is a longitudinal sectional view illustrating another pressure sensor to which the wiring fixing band engagement structure of the refrigerant circuit component according to the invention is applied;
Fig. 3A is a top view illustrating an example of a pressure sensor according to the related art;
Fig. 3B is a front view of the pressure sensor illustrated in Fig. 3A;
Fig. 3C is a top view illustrating a pressure sensor as an example of the refrigerant circuit component according to the invention;
Fig. 3D is a front view of the pressure sensor illustrated in Fig. 3C;
Fig. 3E is a top view illustrating a pressure sensor as another example of the refrigerant circuit component according to the invention;
Fig. 3F is a front view of the pressure sensor illustrated in Fig. 3E;
Fig. 3G is a top view illustrating a pressure sensor as another example of the refrigerant circuit component according to the invention;
Fig. 3H is a front view of the pressure sensor illustrated in Fig. 3G;
Fig. 4A is a top view illustrating another example of the pressure sensor according to the related art;
Fig. 4B is a front view of the pressure sensor illustrated in Fig. 4A;
Fig. 4C is a top view illustrating a pressure sensor as an example of the refrigerant circuit component according to the invention;
Fig. 4D is a front view of the pressure sensor illustrated in Fig. 4C;
Fig. 4E is a top view illustrating a pressure sensor as another example of the refrigerant circuit component according to the invention;
Fig. 4F is a front view of the pressure sensor illustrated in Fig. 4E;
Fig. 5A is a top view illustrating another example of the pressure sensor according to the related art;
Fig. 5B is a front view of the pressure sensor illustrated in Fig. 5A;
Fig. 5C is a top view illustrating a pressure sensor as an example of the refrigerant circuit component according to the invention; and
Fig. 5D is a front view of the pressure sensor illustrated in Fig. 5C.

### Description of Embodiments

Hereinafter, an embodiment of the invention will be described with reference to accompanying drawings.

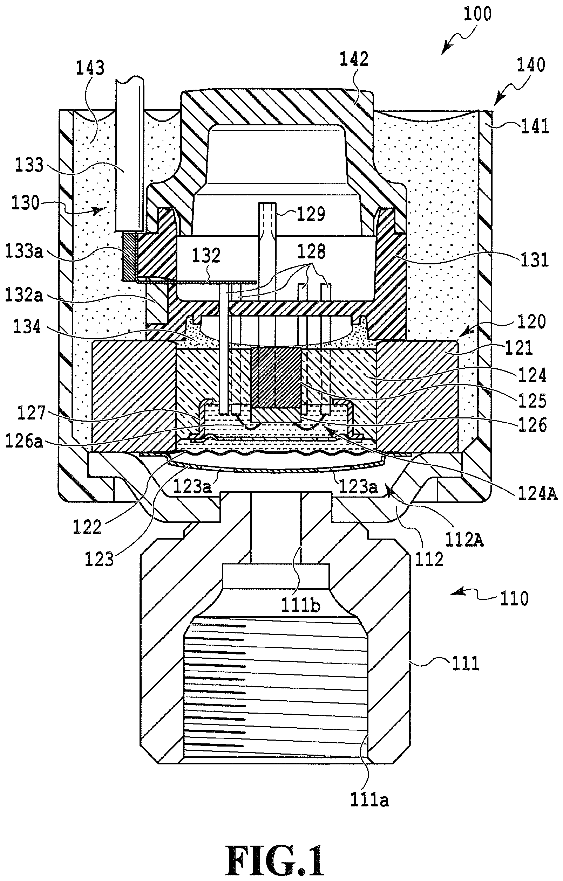

Fig. 1 is a longitudinal sectional view illustrating a liquid seal-type pressure sensor 100 to which a wiring fixing band engagement structure of a refrigerant circuit component according to the invention is applied.

In Fig. 1, the liquid seal-type pressure sensor 100 is provided with a fluid introduction unit 110 supplying a fluid as a pressure detection object to a pressure chamber 112A (described later), a pressure detection unit 120 detecting the pressure of the fluid in the pressure chamber 112A, a signal transmission unit 130 transmitting a pressure signal detected by the pressure detection unit 120 to the outside, and an outer surface member 140 covering the fluid introduction unit 110, the pressure detection unit 120, and the signal transmission unit 130.

The fluid introduction unit 110 is provided with a metallic joint member 111 connected to piping through which the fluid as a pressure detection object is guided and a bowl-shaped metallic base plate 112 connected by welding or the like to the end portion of the joint member 111 other than the end portion of the joint member 111 connected to the piping.

The joint member 111 has a female screw portion 111a screwed into the male screw portion of a connecting portion of the piping and a port 111b guiding the fluid introduced from the piping to the pressure chamber 112A. The port 111b has an open end connected by welding or the like to the opening portion that is disposed in the middle of the base plate 112. Although the female screw portion 111a is disposed in the joint member 111 here, a male screw may be disposed instead or a connection pipe made of copper may be connected instead of the joint member 111. The base plate 112 has a bowl shape and widens toward the side that faces the joint member 111, and the pressure chamber 112A is formed between the base plate 112 and a diaphragm 122 (described later).

The pressure detection unit 120 is provided with a housing 121 having a through hole, the diaphragm 122 isolating the pressure chamber 112A and a liquid-sealed chamber 124A (described later) from each other, a diaphragm protection cover 123 disposed on the pressure chamber 112A side of the diaphragm 122, hermetic glass 124 sealed inside the through hole of the housing 121, the liquid-sealed chamber 124A filled with a pressure transmission medium such as silicone oil between the recessed portion of the hermetic glass 124 on the pressure chamber 112A side and the diaphragm 122, a support 125 disposed in the through hole in the middle of the hermetic glass 124, a pressure detection element 126 fixed to the support 125 and disposed inside the liquid-sealed chamber 124A, a potential adjustment member 127 disposed around the liquid-sealed chamber 124A, a plurality of lead pins 128 fixed to the hermetic glass 124, and an oil filling pipe 129 fixed to the hermetic glass 124.

The housing 121 is formed of, for example, a metal material such as a Fe-Ni alloy and stainless steel. Both the diaphragm 122 and the diaphragm protection cover 123 are formed of a metal material and are welded in the outer peripheral edge portion of the through hole of the housing 121 on the pressure chamber 112A side. The diaphragm protection cover 123 is disposed inside the pressure chamber 112A to protect the diaphragm 122 and has a plurality of communication holes 123a through which the fluid introduced from the fluid introduction unit 110 passes. After the pressure detection unit 120 is assembled, the housing 121 is connected by welding or the like in the outer peripheral edge portion of the base plate 112 of the fluid introduction unit 110.

The pressure detection element 126 is bonded and fixed to the liquid-sealed chamber 124A side of the support 125 by an adhesive layer (not illustrated) including an adhesive. Although the support 125 is formed of a Fe-Ni alloy in the present embodiment, the invention is not limited thereto and the support 125 may be formed of another metal material such as stainless steel instead. The pressure detection element 126 detects the pressure of the fluid introduced from the fluid introduction unit 110 to the pressure chamber 112A via the diaphragm 122 as pressure fluctuation of the silicone oil in the liquid-sealed chamber 124A.

The potential adjustment member 127 is disposed so that the pressure detection element 126 is put in a zero electric field (zero potential) and a circuit in a chip or the like is not negatively affected by the potential generated between a frame earth and a secondary power source as described in Japanese Patent No. 3987386. The potential adjustment member 127 is disposed between the diaphragm 122 and the pressure detection element 126 in the liquid-sealed chamber 124A, formed of a conductive material such as metal, and connected to a terminal connected to the zero potential of the pressure detection element 126.

The plurality of lead pins 128 and the oil filling pipe 129 are fixed to the hermetic glass 124 by hermetic treatment in a state where the plurality of lead pins 128 and the oil filling pipe 129 penetrate the hermetic glass 124. In the present embodiment, a total of eight lead pins 128 are disposed as the lead pins 128, which are divided into three for external input and output (Vout), power supply (Vcc), and grounding (GND) and five as terminals for adjusting the pressure detection element 126. Four out of the eight lead pins 128 are illustrated in Fig. 1. The plurality of lead pins 128 are connected to the pressure detection element 126, for example, by a bonding wire 126a made of metal or aluminum and constitute the external input and output terminal of the pressure detection element 126.

The oil filling pipe 129 is disposed so that the inside of the liquid-sealed chamber 124A is filled with the pressure transmission medium such as the silicone oil. After oil filling, one end portion of the oil filling pipe 129 is crushed and blocked as indicated by the dotted lines in Fig. 1.

The signal transmission unit 130 is disposed on the side of the pressure detection unit 120 that faces the pressure chamber 112A. The signal transmission unit 130 is provided with a terminal block 131 arranging the plurality of lead pins 128, a plurality of connection terminals 132 fixed to the terminal block 131 by an adhesive 132a and connected to the plurality of lead pins 128, a plurality of electric wires 133 electrically connected by soldering or the like to the outer end portions of the plurality of connection terminals 132, and an electrostatic protection layer 134 formed of a silicone adhesive between the upper end portion of the housing 121 and the terminal block 131.

The terminal block 131 has a substantially columnar shape and is shaped to have a side wall near the middle stage of the column so that the plurality of lead pins 128 are guided. The terminal block 131 is formed of a resin material such as polybutylene terephthalate (PBT). The terminal block 131 is fixed to the upper portion of the housing 121 of the pressure detection unit 120, for example, by an adhesive such as epoxy resin.

The connection terminals 132 are formed of a metal material and fixed by the adhesive 132a perpendicularly to the side wall of the column above the fixed wall of the terminal block 131 described above. Three connection terminals 132 for external input and output (Vout), power supply (Vcc), and grounding (GND) are disposed in the present embodiment. Although the inner end portions of the three connection terminals 132 are electrically connected by welding or the like to the respective corresponding lead pins 128, there is no limitation on the connection method and the connection may be performed by any method.

In the present embodiment, three electric wires 133 are disposed to be connected to the three connection terminals 132. Although the electric wires 133 are connected to the connection terminals 132 by preliminary soldering being performed in advance on uncoated core wires 133a of the electric wires 133 that are formed of polyvinyl chloride (PVC) or the like and the stranded wires being bundled and electrically connected to the connection terminals 132 by soldering, welding, or the like, there is no limitation on the connection method and the connection may be performed by any method. In addition, after being pulled out from the outer surface member 140 as a covering around the pressure sensor 100, the three electric wires 133 are covered in a bundled state with a protective tube 135 formed of polyvinyl chloride (PVC) or the like.

An annular adhesive layer that has a predetermined thickness and a coating layer that includes a silicone adhesive constitute the electrostatic protection layer 134. The annular adhesive layer is formed by being bonded by a silicone adhesive to the upper end surface of the housing 121 to cover the upper end surface of the hermetic glass 124, and the coating layer is formed over the entire upper end surface of the hermetic glass 124 from which the plurality of lead pins 128 protrude. The electrostatic protection layer 134 is disposed to improve the electrostatic resistance of the pressure detection unit 120 without being affected by the presence or absence of an ESD protection circuit.

The outer surface member 140 is provided with a substantially cylindrical waterproof case 141 as a covering around the pressure detection unit 120 and the signal transmission unit 130, a terminal block cap 142 covering the upper portion of the terminal block 131, and a sealant 143 as a filler between the inner peripheral surface of the waterproof case 141 and the outer peripheral surfaces of the housing 121 and the terminal block 131.

The terminal block cap 142 is formed of, for example, a resin material. In the present embodiment, the terminal block cap 142 is shaped to block the upper portion of the columnar terminal block 131 and covers the upper portion of the terminal block 131 before filling with the sealant 143 such as urethane resin. However, the shape of the terminal block cap 142 is not particularly limited and the terminal block cap 142 may be shaped to integrally block the upper portions of the terminal block 131 and the waterproof case 141 and cover the upper portions after filling with the sealant 143 instead. Alternatively, a new lid member may be disposed separately from the terminal block cap 142 to cover the upper portion of the waterproof case 141 after the terminal block cap 142 and the sealant 143 are disposed.

The waterproof case 141 is formed of, for example, a resin material and in a substantially cylindrical shape. An inward flange portion is disposed in the cylindrical lower end portion. The outer peripheral portion of the base plate 112 of the fluid introduction unit 110 to which the signal transmission unit 130 and the pressure detection unit 120 inserted from the opening portion in the upper portion of the waterproof case 141 are connected abuts against the flange portion. The internal parts such as the pressure detection unit 120 are fixed by filling with the sealant 143 being performed in this state.

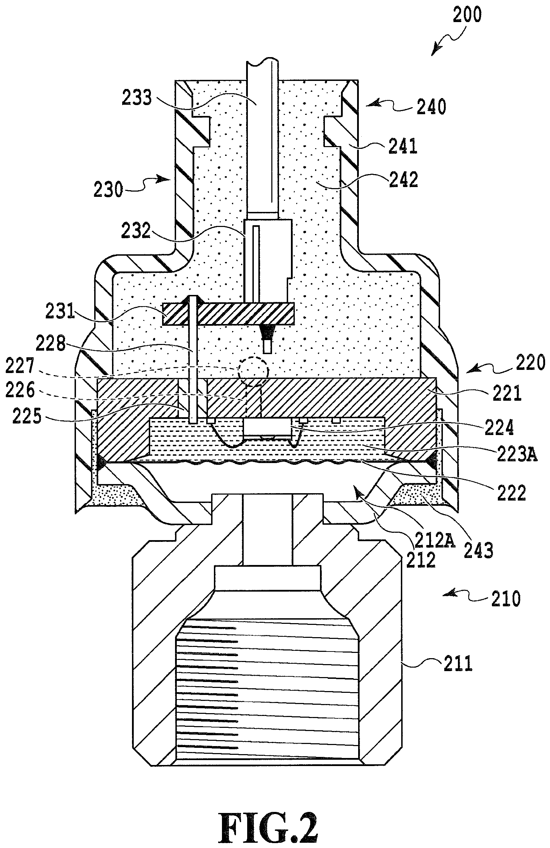

Fig. 2 is a longitudinal sectional view illustrating another pressure sensor 200 to which the wiring fixing band engagement structure of the refrigerant circuit component according to the invention is applied.

The pressure sensor 200 illustrated in Fig. 2 is a liquid seal-type pressure sensor as is the case with the pressure sensor 100 illustrated in Fig. 1. The pressure sensor 200 illustrated in Fig. 2 differs significantly from the pressure sensor 100 illustrated in Fig. 1 in that a waterproof case 241 as an outer surface member does not have a columnar shape and is shaped such that the upper end side covering a connector 232 is reduced in diameter and the lower end side covering a pressure detection unit 220 is significantly enlarged in inner diameter and that a plurality of electric wires 233 are pulled out from the middle of the upper portion of the waterproof case 241.

In Fig. 2, the liquid seal-type pressure sensor 200 is provided with a fluid introduction unit 210 supplying a fluid as a pressure detection object to a pressure chamber 212A (described later), the pressure detection unit 220 detecting the pressure of the fluid in the pressure chamber 212A, a signal transmission unit 230 transmitting a pressure signal detected by the pressure detection unit 220 to the outside, and an outer surface member 240 covering the fluid introduction unit 210, the pressure detection unit 220, and the signal transmission unit 230.

The fluid introduction unit 210 is provided with a joint member 211 having a flow path through which the fluid as a pressure detection object is guided and a bowl-shaped metallic base plate 212 connected by welding or the like to one end portion of the joint member 211 and forming the pressure chamber 212A with a diaphragm 222 (described later).

The pressure detection unit 220 is provided with a metallic housing 221 made of stainless steel or the like and having a recessed portion on the fluid introduction unit 210 side, the diaphragm 222 welded with the base plate 212 in the outer peripheral edge portion of the recessed portion of the housing 221 and isolating the pressure chamber 212A and a liquid-sealed chamber 223A (described later) from each other, the liquid-sealed chamber 223A sealed by a hermetic seal 225 (described later) and filled with a pressure transmission medium between the recessed portion of the housing 221 and the diaphragm 222, a pressure detection element 224 bonded and fixed to the middle portion of the housing 221 by an adhesive layer (not illustrated) including an adhesive, disposed inside the liquid-sealed chamber 223A, and detecting pressure fluctuation of the pressure transmission medium via the diaphragm 222, the hermetic seal 225 sealing the liquid-sealed chamber 223A, an oil filling passage 226 fixed to a part of the housing 221 and filling the liquid-sealed chamber 223A with the pressure transmission medium, a ball 227 sealing one end portion after filling with the pressure transmission medium from the oil filling passage 226, and a plurality of lead pins 228 fixed to the housing 221 by the hermetic seal 225 and connected to the pressure detection element 224 via wire bonding.

The signal transmission unit 230 is disposed on the upper portion of the pressure detection unit 220 inside the waterproof case 241 (described later). The signal transmission unit 230 is provided with a substrate 231 connected to the plurality of lead pins 228 and the electric wires 233 connected to the substrate 231 via the connector 232 and pulled out from the middle of the upper portion of the waterproof case 241 (described later). After being pulled out from the outer surface member 240 as a covering around the pressure sensor 200, the plurality of electric wires 233 are covered in a bundled state with a protective tube 235 formed of polyvinyl chloride (PVC) or the like. Although the electric wires 233 are pulled out from the middle of the upper portion of the waterproof case 241 here, the invention is not limited thereto and the electric wires 233 may be pulled out from a part other than the middle of the upper portion or from the lateral direction instead.

The outer surface member 240 is formed of a resinous material and in a substantially tubular shape. The outer surface member 240 is provided with the waterproof case 241 shaped such that the upper end side covering the connector 232 is reduced in diameter and the lower end side covering the pressure detection unit 220 is significantly enlarged in inner diameter, a sealant 242 including an adhesive and sealing the space in the waterproof case 241, and a sealant 243 including an adhesive and sealing the space between the waterproof case 241 and the base plate 212.

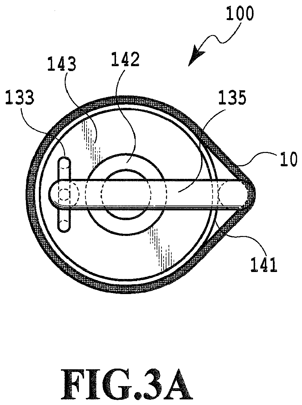

Examples in which the wiring fixing band engagement structure of the refrigerant circuit component according to the invention is applied to the pressure sensor 100 illustrated in Fig. 1, the pressure sensor 200 illustrated in Fig. 2, and the like will be described with reference to Figs. 3A to 5D below.

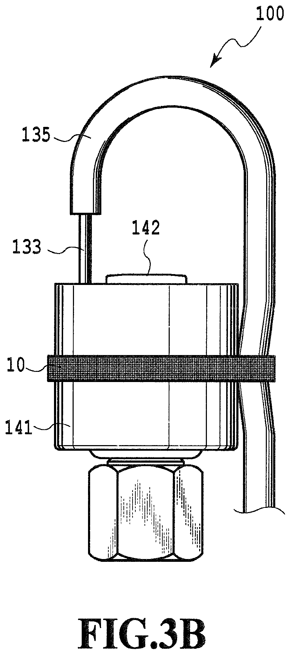

The pressure sensor 100 as in Fig. 1 is illustrated in Figs. 3A and 3B.

In Figs. 3A and 3B, the pressure sensor 100 mainly includes the outer surface member 140 including the substantially columnar waterproof case 141, the terminal block cap 142 covering the upper portion of the terminal block 131, and the sealant 143 with which the waterproof case 141 is filled, the plurality of electric wires 133 pulled out from a position deviating from the center of the upper end portion (refer to Fig. 3B) of the outer surface member 140 having a columnar shape as a whole, the protective tube 135 covering the plurality of electric wires 133 in a bundled state outside the outer surface member 140, and a wiring fixing band 10 such as Ty-Rap (registered trademark) disposed around the waterproof case 141 of the outer surface member 140 and fixing the protective tube 135 covering the plurality of electric wires 133 in a bundled state.

The wiring fixing band 10 had a problem in that the wiring fixing band 10 deviated or was released due to vibration or pulling of wiring. Moreover, additional problems arose in the form of reduced workability and higher costs when an adhesive material-attached sponge such as maltoprene was pasted to the outer surface member for the deviation to be prevented. Examples in which the wiring fixing band engagement structure of the refrigerant circuit component according to the invention is applied to the pressure sensor 100 so that the above-mentioned conventional problems are solved will be described below.

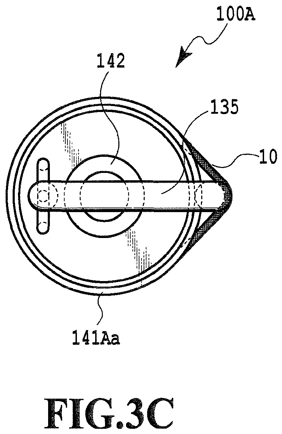

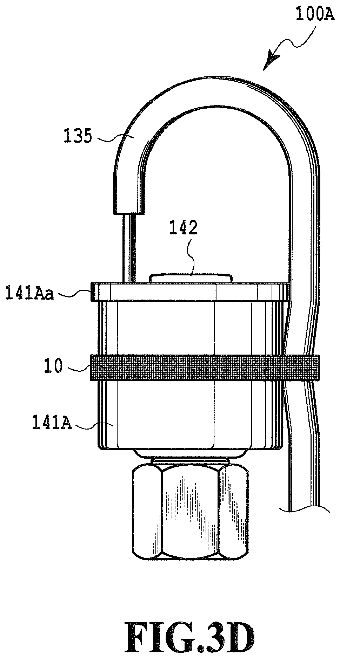

A pressure sensor 100A as an example of the refrigerant circuit component according to the invention is illustrated in Figs. 3C and 3D.

In Figs. 3C and 3D, the pressure sensor 100A is provided with the wiring fixing band engagement structure that is a projection portion 141Aa disposed over the entire circumference of the columnar upper portion of a substantially columnar waterproof case 141A. As a result, the wiring fixing band 10 is engaged with the projection portion 141Aa and deviation or release of the wiring fixing band 10 can be prevented, and thus the above-mentioned conventional problems are solved.

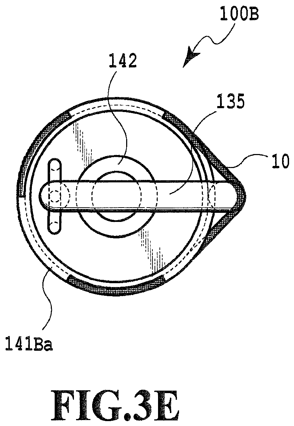

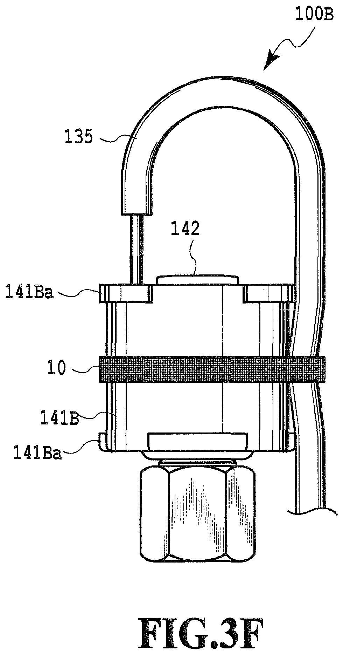

A pressure sensor 100B as an example of the refrigerant circuit component according to the invention is illustrated in Figs. 3E and 3F.

In Figs. 3E and 3F, the pressure sensor 100B is provided with the wiring fixing band engagement structures that are a plurality of projection portions 141Ba disposed at a part of the columnar upper portion and a part of the columnar lower portion of a substantially columnar waterproof case 141B. As a result, the wiring fixing band 10 is engaged with the plurality of projection portions 141Ba and deviation or release of the wiring fixing band 10 can be prevented, and thus the above-mentioned conventional problems are solved.

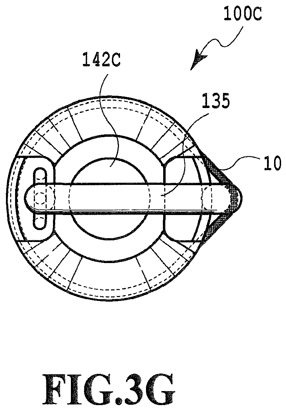

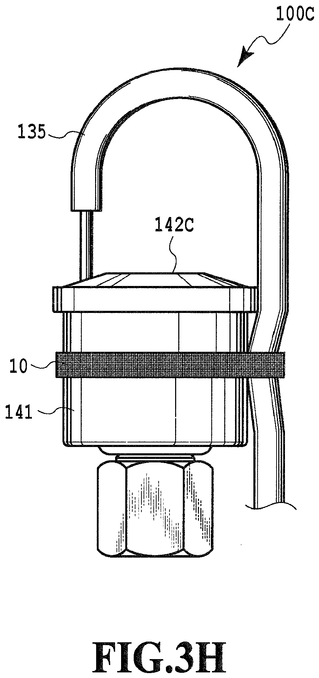

A pressure sensor 100C as an example of the refrigerant circuit component according to the invention is illustrated in Figs. 3G and 3H.

In Figs. 3G and 3H, the pressure sensor 100C is provided with the wiring fixing band engagement structure that is an outer peripheral part of a lid member 142C protruding from the upper portion of the waterproof case 141 and covering the entire upper portion of the waterproof case 141. As a result, the wiring fixing band 10 is engaged with the lid member 142C and deviation or release of the wiring fixing band 10 can be prevented, and thus the above-mentioned conventional problems are solved.

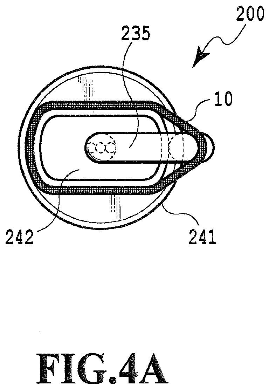

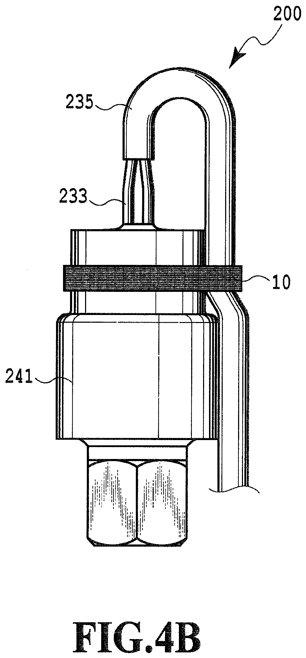

The pressure sensor 200 as in Fig. 2 is illustrated in Figs. 4A and 4B.

In Figs. 4A and 4B, the pressure sensor 200 mainly includes the outer surface member 240 including the waterproof case 241 shaped such that the upper end side is reduced in diameter and the lower end side is significantly enlarged in inner diameter and the sealant 242 with which the waterproof case 241 is filled, the plurality of electric wires 233 pulled out from the center of the upper end portion (refer to Fig. 4B) of the outer surface member 240, the protective tube 235 covering the plurality of electric wires 233 in a bundled state outside the outer surface member 240, and the wiring fixing band 10 such as Ty-Rap (registered trademark) disposed around the waterproof case 241 of the outer surface member 240 and fixing the protective tube 235 covering the plurality of electric wires 233 in a bundled state. Examples in which the wiring fixing band engagement structure of the refrigerant circuit component according to the invention is applied to the pressure sensor 200 so that the above-mentioned conventional problems are solved will be described below.

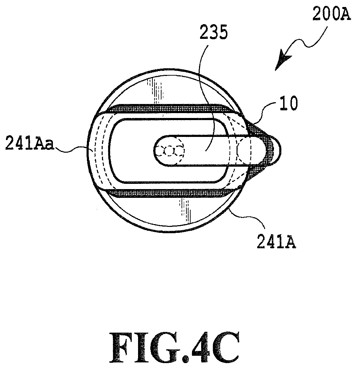

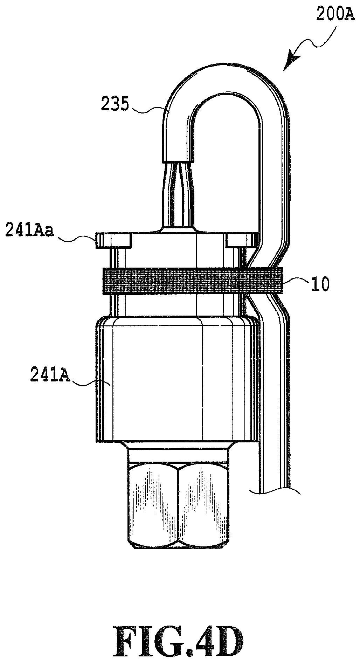

A pressure sensor 200A as an example of the refrigerant circuit component according to the invention is illustrated in Figs. 4C and 4D.

In Figs. 4C and 4D, the pressure sensor 200A is provided with the wiring fixing band engagement structures that are a plurality of projection portions 241Aa disposed on the longitudinal-direction side surface of the diameter-reduced upper portion of a waterproof case 241A. As a result, the wiring fixing band 10 is engaged with the plurality of projection portions 241Aa and deviation or release of the wiring fixing band 10 can be prevented, and thus the above-mentioned conventional problems are solved.

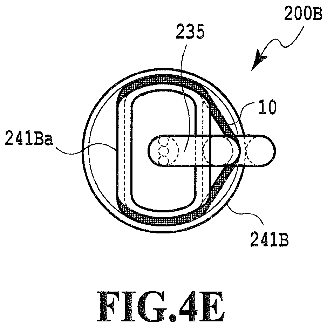

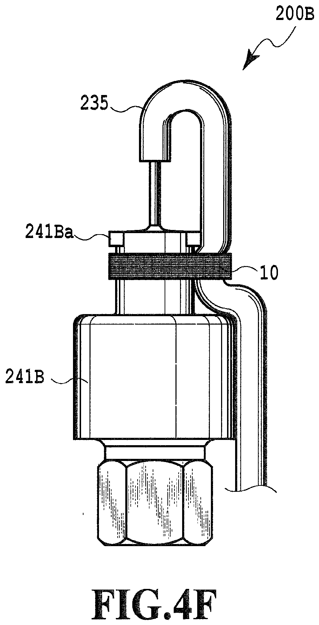

A pressure sensor 200B as an example of the refrigerant circuit component according to the invention is illustrated in Figs. 4E and 4F.

In Figs. 4E and 4F, the pressure sensor 200B is provided with the wiring fixing band engagement structures that are a plurality of projection portions 241Ba disposed on the short-direction side surface of the diameter-reduced upper portion of a waterproof case 241B. As a result, the wiring fixing band 10 is engaged with the plurality of projection portions 241Ba and deviation or release of the wiring fixing band 10 can be prevented, and thus the above-mentioned conventional problems are solved.

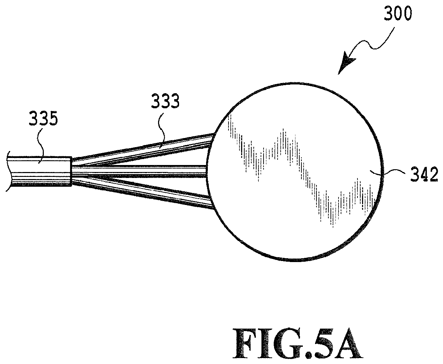

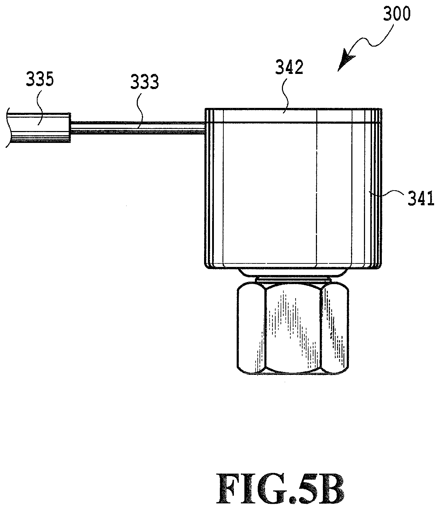

A pressure sensor 300 according to the related art is illustrated in Figs. 5A and 5B, in which a plurality of electric wires 333 are pulled out from the lateral direction of an outer surface member 340.

In Figs. 5A and 5B, the pressure sensor 300 according to the related art mainly includes the outer surface member 340 including a substantially cylindrical waterproof case 341 and a lid member 342 covering the entire upper portion of the waterproof case 341, the plurality of electric wires 333 pulled out in the lateral direction (refer to Fig. 5B) of the outer surface member 340, and a protective tube 335 covering the plurality of electric wires 333 in a bundled state outside the outer surface member 340. An example in which the wiring fixing band engagement structure of the refrigerant circuit component according to the invention is applied to the pressure sensor 300 so that the above-mentioned conventional problems are solved will be described below.

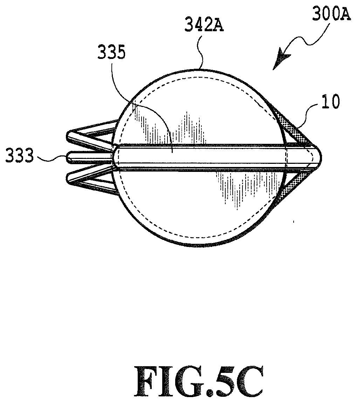

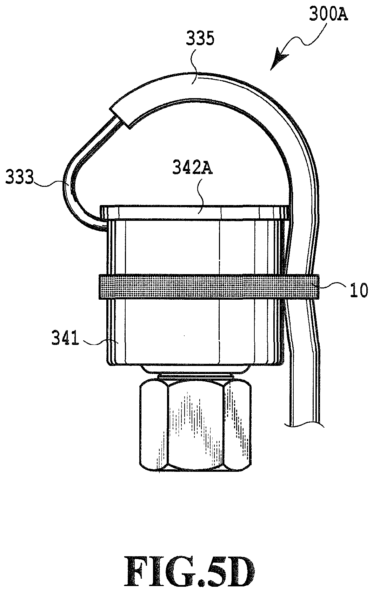

A pressure sensor 300A as an example of the refrigerant circuit component according to the invention is illustrated in Figs. 5C and 5D.

In Figs. 5C and 5D, the pressure sensor 300A is provided with the wiring fixing band engagement structure that is an outer peripheral part of a lid member 342A protruding from the upper portion of the waterproof case 341 and covering the entire upper portion of the waterproof case 341. As a result, the wiring fixing band 10 is engaged with the lid member 342A and deviation or release of the wiring fixing band 10 can be prevented, and thus the above-mentioned conventional problems are solved.

In the present embodiment, examples have been described in which the wiring fixing band engagement structure of the refrigerant circuit component according to the invention is applied to the liquid seal-type pressure sensors 100, 200, and 300. However, the invention is not limited thereto and the invention is applicable to every refrigerant circuit component connected to piping of a refrigerant circuit such as a pressure sensor having an outer surface member disposed to cover the outer periphery and wiring such as conduit tubes and electric wires pulled to the outside from the outer surface member, a pressure-sensitive device such as a pressure switch, an electromagnetic valve as disclosed in Japanese Patent Laid-Open No. 2013-84891, and a valve device such as an electric valve as disclosed in Japanese Patent Laid-Open No. 2014-52037. In addition, the shape of the wiring fixing band engagement structure is not limited to the shape according to the embodiment and the outer surface member may be provided with a shape preventing deviation or release of the wiring fixing band.

As described above, in the refrigerant circuit component member according to the invention, the outer surface member is provided with the wiring fixing band engagement structure and this is to prevent deviation or release of the wiring fixing band for fixing wiring, such as an electric wire pulled to the outside from the outer surface member, to the outer surface member. Accordingly, work man-hours can be reduced, workability can be improved, and an increase in cost can be suppressed.

### Reference Signs List

10 Wiring fixing band
100, 100A, 100B, 100C, 200, 200A, 200B, 300, 300A Pressure sensor
110, 210 Fluid introduction unit
111, 211 Joint member
111a Female screw portion
111b Port
112, 212 Base plate
112A, 212A Pressure chamber
120, 220 Pressure detection unit
121, 221 Housing
122, 222 Diaphragm
123 Diaphragm protection cover
123a Communication hole
124 Hermetic glass
124A, 223A Liquid-sealed chamber
125 Support
126 Pressure detection element
126a Bonding wire
127 Potential adjustment member
128, 228 Lead pin
129 Oil filling pipe
130, 230 Signal transmission unit
131 Terminal block
132 Connection terminal
132a Adhesive
133, 233, 333 Electric wire
133a Core wire
134 Electrostatic protection layer
135, 235, 335 Protective tube
140, 240, 340 Outer surface member
141, 141A, 141B, 241, 241A, 241B, 341 Waterproof case
141Aa, 141Ba, 241Aa, 241Ba Projection portion
142 Terminal block cap
142C, 342, 342A Lid member
143, 242, 243 Sealant
225 Hermetic seal
226 Oil filling passage
227 Ball
231 Substrate
232 Connector

## Claims

1. A refrigerant circuit component connected to piping of a refrigerant circuit, the refrigerant circuit component comprising:
an outer surface member disposed outside the refrigerant circuit component to form an outline of the refrigerant circuit component;
at least one wire pulled to an outside from the outer surface member; and
a wiring fixing band disposed around the outer surface member and fixing the at least one wire,
wherein the outer surface member is provided with a wiring fixing band engagement structure so that deviation or release of the wiring fixing band is prevented.

2. The refrigerant circuit component according to claim 1, wherein the outer surface member has a cylindrical shape as a whole and the wire is pulled out from a position deviating from a center of one end portion of the outer surface member.

3. The refrigerant circuit component according to claim 1, wherein the outer surface member includes a tubular waterproof case and a lid member disposed on at least one end portion of the waterproof case.

4. The refrigerant circuit component according to claim 1, wherein the outer surface member includes a tubular waterproof case.

5. The refrigerant circuit component according to claim 3 or 4, wherein the wiring fixing band engagement structure is disposed on the waterproof case.

6. The refrigerant circuit component according to claim 3, wherein the wiring fixing band engagement structure is disposed on the lid member.

7. The refrigerant circuit component according to claim 1, wherein the outer surface member includes a non-cylindrical part and the wire is pulled out from a center of an upper portion of the non-cylindrical part.

8. The refrigerant circuit component according to claim 1, wherein the at least one wire is pulled out in a lateral direction of the outer surface member.

9. The refrigerant circuit component according to claim 1, wherein the refrigerant circuit component is a pressure sensor.
